# EUROPÄISCHE PATENTSCHRIFT

(11) **EP 3 746 245 B1**
(45) Veröffentlichungstag und Bekanntmachung des Hinweises auf die Patenterteilung: **09.08.2023**
(21) Anmeldenummer: 19706236.7
(22) Anmeldetag: 09.01.2019
(51) Int. Cl.: B23B 27/16, B23B 29/04, B23C 5/22

(54) **WERKZEUG FÜR DIE SPANENDE BEARBEITUNG**
TOOL FOR MACHINING
OUTIL POUR L'USINAGE PAR ENLÈVEMENT DE COPEAUX

(30) Priorität: 02.02.2018 DE 202018100594 U
(43) Veröffentlichungstag der Anmeldung: 09.12.2020
(73) Patentinhaber: ZCC Cutting Tools Europe GmbH, 40472 Düsseldorf (DE)
(72) Erfinder: AGUSTIN-PAYA, Jose, 45478 Mülheim an der Ruhr (DE); ZHAO, Quanliang, 40625 Düsseldorf (DE)
(74) Vertreter: Patentanwälte Vomberg & Schart
(86) Internationale Anmeldenummer: PCT/DE2019/100013
(87) Internationale Veröffentlichungsnummer: WO 2019/149309

(56) Entgegenhaltungen:
- EP-A2- 0 195 246
- DE-A1- 2 102 237
- DE-A1- 2 545 236
- DE-A1-102011 107 832
- DE-A1-102013 212 459
- SU-A1- 1 473 904
- US-A1- 2006 230 890

## Beschreibung

Die Erfindung betrifft ein Werkzeug für die spanende Bearbeitung mit einem Grundhalter, einer auswechselbaren Kassette mit einem Schneidplattensitz, einer Spannpratze mit einem Spannpratzenarm und einem endseitigen Spannpratzenkopf, und einem Schneideinsatz, wobei die Spannpratze mit dem Grundhalter lösbar verbunden ist und im Werkzeug durch den Grundhalter und die Spannpratze mindestens eine Kühlflüssigkeitsleitung geführt ist, die in mindestens eine Ausgangsdüse am Spannpratzenkopf mündet, wobei die auswechselbare Kassette einstückig U-förmig mit einem Mittelabschnitt und zwei jeweils beidseitig des Mittelabschnitts angeordneten Schenkeln ausgebildet ist, wovon der den Schneidplattensitz aufweisende Schenkel L-förmig geformt ist und einen hakenförmigen Ansatz aufweist, der im Wesentlichen senkrecht zum Plattensitz angeordnet ist und in eine Mulde oder eine Hinterschneidung des Grundhalters eingreift.

Ein solches Werkzeug ist aus der WO 2014/001447 bekannt.

Kühlmitteln bzw. Kühlschmiermitteln kommt bei Zerspanungsprozessen eine erhebliche Bedeutung zu. Beim Zerspanen, zu dem Drehen, Fräsen und Bohren zählen, kommt es an der aktiven Schneidkante, welche den Span von dem Werkstück abhebt, zu hohen Temperaturen, die den Verschleiß des Schneideinsatzes beschleunigen. Der Grund für die Temperaturerhöhung an der Schneideinsatzschneide liegt darin, dass die spezifische Wärme sowie die Wärmeleitfähigkeit des Schneideinsatzwerkstoffes nicht ausreichen, um die entstehende Reibungswärme in hinreichendem Maß abzuführen. Bei der Zerspanung von Titanwerkstücken kommt noch hinzu, dass Titan dazu neigt, sich mit dem Werkzeug zu verschweißen. Eine solche Klebeneigung kann ebenfalls mit einem Kühlschmierstoff minimiert werden, um ein Kühlmittel in ausreichender Menge an dem Zerspanungsort zu bringen. So schlägt die DE 37 40 814 A1 ein Klemmwerkzeug mit einem Klemmhalter und einem daran fixierten Schneidkörper vor, bei dem der Klemmhalter und der Schneidkörper mit innerhalb der Anlageflächen dieser beiden Bauteile ineinander mündenden Kühlmittelkanälen versehen sind. Mindestens ein Kühlmittelkanal des Schneidkörpers soll in unmittelbarer Nähe der aktiven Schneidkante münden. Der Nachteil einer solchen Ausgestaltung liegt darin, dass Bohrungen im Schneideinsatz den Schneideinsatzkörper schwächen, womit die Bruchgefahr erhöht wird. Im Übrigen ist die über solche Bohrungen zugeführte Kühlmittelmenge häufig nicht ausreichend.

In der DE 930 790 C2 wird beschrieben, dass der Kühlmittelstrahl aus einem Düsenmundstück unter Druck und hoher Geschwindigkeit in den Raum zwischen der Freifläche des Werkzeuges und dem Werkstück an die Schneidkante gespritzt wird. Abgesehen davon, dass hiermit im Wesentlichen nur die Freifläche des Werkzeugs, nicht jedoch die Spanfläche sowie die abgehobenen Späne mit einem Kühlmittel beaufschlagt werden, besteht noch der Nachteil, dass die verwendete Düse an einer separaten Haltevorrichtung angeordnet ist, die ohne Verbindung zum Werkzeug bzw. Werkzeughalter steht und somit schwer justierbar ist.

Unter anderem in der EP 1 073 535 B1 wird vorgeschlagen, einen Kühlmittel-Fluid-Strahl nicht nur für die reine Kühlung des Schneideinsatzes auszunutzen, sondern zusätzlich um Späne, die von dem Werkstück freigeschnitten werden, mechanisch zu beeinflussen, insbesondere mit dem Ziel, die Späne in kleinstmögliche Teile zu brechen. Das Kühlmittel soll mit einem hohen Druck auf die Schnittstelle (Schneidkante) gerichtet werden, der oberhalb von 10⁷ Pa liegt. Hierzu besitzt der Werkzeughalter einen Sitz für einen Schneideinsatz sowie eine angeschraubte Platte, die mindestens eine Düse aufweist, die Teil eines Düseneinsatzes ist, der um seine eigene Mittelachse gedreht werden kann und derart in einer Position fixierbar sein soll, dass der Kühlmittel-Fluid-Strahl von dieser Düse ausgehend auf die Spanflächen des Schneideinsatzes gerichtet wird.

Es ist Aufgabe der vorliegenden Erfindung ein Werkzeug der eingangs genannten Art dahingehend weiterzuentwickeln, dass ein schneller Kassettenwechsel mit besserer Handhabung und einer sicheren Einspannung erzielt wird.

Zur Lösung dieser Aufgabe dient das Werkzeug nach Anspruch 1, das eine Kassette besitzt, die an der dem Grundhalter zugewandten Seite ein Profil besitzt, das mit einem Profil des Grundhalters einen Formschluss bildet, so dass die Kassette gegen eine seitliche Verrückung gesichert ist.

Eine insbesondere bevorzugte Formschlussausbildung besteht aus einer Verzahnung von mindestens einer Rippe mit einer korrespondierenden Ausnehmung, vorzugsweise mindestens drei Rippen, die in entsprechende Ausnehmungen bzw. Nuten eingreifen. Unter einer Rippe kann sowohl eine Geometrie mit einem trapezförmigen Profil oder auch einer regelmäßigen oder unregelmäßigen abgerundeten Form verstanden werden, wobei sich in einer Querschnittsansicht auch eine wellenförmige Oberfläche anbietet.

Die Rippen können entweder an der Kassetten-Innenseite oder an der Grundhalter-Oberfläche realisiert sein, wichtig ist nur, dass durch die Profile eine seitliche Verschiebung vermieden wird. Um dies zu gewährleisten, sollte die Rippenhöhe beziehungsweise Nuttiefe mindestens 1 mm sein, wobei bereits eine Einhaltung der Mindesttiefe beziehungsweise Rippenhöhe ausreichend ist.

Wie später noch ausgeführt wird, kann die Formschlussverbindung im Prinzip an beliebigen Orten (Anlagenflächen) zwischen der Kassette und dem Grundhalter angeordnet sein, vorzugsweise wird die Formschlussverbindung im Mittelabschnitt gewählt.

Der besondere Vorteil der vorliegenden Erfindung besteht darin, dass die Kassette mit diesem weiteren Sicherungselement leicht handhabbar ist.

Ein Kassettenaustausch ist insbesondere erforderlich, wenn die Kassette durch Schlagbeanspruchung zerstört oder beschädigt ist oder in Folge eines unvermeidbaren Verschleißes keine exakte Anordnung des Schneideinsatzes im Plattensitz gewährleistet ist. In einem solchen Fall wird die bestehende Klemmverbindung über die Klemmpratze gelöst und gegebenenfalls die Klemmpratze entfernt. Falls notwendig ist eine zusätzliche Schraubverbindung zwischen der Kassette und dem Grundhalter zu entfernen, wonach die Kassette in einfacherweise durch Verschwenkung vom Grundhalter weg entfernt werden kann. Hiernach kann eine neue Kassette, ggf. mit bereits vormontierter Schneidplatte in entsprechender Weise mit ihrem L-förmigen Abschnitt in die entsprechende Hinterschneidungsöffnung oder Mulde am Grundhalter eingeführt und verschwenkt und hiernach über die Schraubverbindungen verspannt werden. Bei der Verschwenkung wird wegen der Rippennut oder anderer ähnlicher Formschlussprofile die Kassette exakt in die vorgesehene Idealposition geführt und nach einer Schraubbefestigung auch sicher fixiert. Ein Verschieben oder auch Verbiegen aus dieser Lage bei Auftreten von Querkräften wird wirkungsvoll vermieden.

Nach einer vorzugsweisen Ausführungsform wird die Kassette am Grundhalter mittels einer Schraube befestigt, die im Befestigungszustand jeweils Bohrungen der Kassette und den Grundhalter durchgreift. Vorzugsweise weist die Schraube einen konusförmigen Kopf und der Bohrungsrand in der Kassette eine konusförmige Ansenkung auf, so dass beim Anziehen der Befestigungsschrauben über die Konusanlage des Schraubenkopfes an der konusförmigen Ansenkung, die Kassette zwangsläufig in Richtung auf den Grundhalter zu bewegt und dort festanliegend fixiert wird.

Weitere Details der Erfindung sowie ein Ausführungsbeispiel sind in den Zeichnungen dargestellt. Es zeigen:
- Fig. 1: eine Schnittansicht durch ein Werkzeug und
- Fig. 2: eine Querschnittsansicht entlang der Linie A-A in Fig. 1.

Das dargestellte Werkzeug für die spanende Bearbeitung besitzt einen Grundhalter 10, eine Spannpratze 11 mit einem endseitigen Spannpratzenkopf 12, der zur Fixierung eines Schneideinsatzes 13 dient, die im vorliegenden Fall auf einer Plattensitzaufnahme 14 aufliegt. Der Schneideinsatz sowie die Plattensitzaufnahme sind in einer auswechselbaren Kassette 15 angeordnet, die einstückig U-förmig ausgebildet ist und einen Mittelabschnitt 151 sowie einen L-förmigen Schenkel 152 und am gegenüberliegenden Ende einen zweiten Schenkel 153 aufweist. Der in der Zeichnung oben dargestellte L-förmige Schenkel besitzt eine im vorliegenden Fall teilkugelförmige Ausgestaltung 152, die in eine Mulde 101 im Grundhalter eingreift. Der Kassettenteil 153 besitzt eine durch die Strichlinie 155 angedeutete durchgehende Gewindebohrung, die bis auf ein Maß a mit der Gewinde-Sacklochbohrung 102 korrespondiert. In die durchgehenden Gewindebohrung 155 und die Sacklochbohrung 102 kann eine Befestigungsschraube eingedreht werden, wobei die Befestigungsschraube vorzugsweise einen konusförmigen Kopf besitzt, der mit einer konusförmigen Ansenkung der Gewindebohrung 155 korrespondiert. Beim Festziehen der Schraube wird die Kassette in Richtung des Pfeiles F getrieben, wobei die Kassette 15 an ihrer Innenseite in Anlage zur gegenüberliegenden Fläche des Grundhalters 10 gebracht und somit verspannt wird. Bei breiteren Ausführungen des Grundhalters 10 und der Kassette 15 können auch mehrere Schrauben vorgesehen sein, die in mehreren Gewindebohrungen 102, 155 einschraubbar und fixierbar sind.

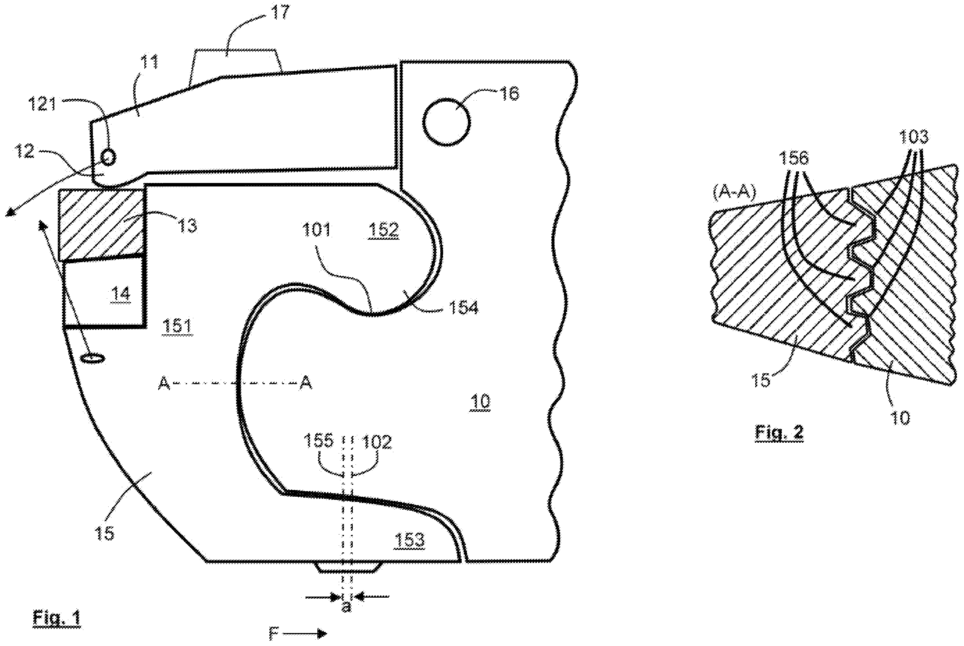

Wie in Fig. 2 ersichtlich, sind die jeweils anliegenden Oberflächen der Kassette 15 und des Grundhalters 10 im mittleren Bereich 151 nicht glattflächig ausgebildet. Die Oberfläche der Kassette 15 weist drei Rippen 156 auf, die in entsprechend konfigurierte Nuten 103 an der Oberfläche der Kassette 10 eingreifen. Im Befestigungszustand wird über die Rippen 156 und die Nuten 103 eine Formschlussverbindung geschaffen, welche Relativbewegungen der Kassette gegenüber dem Grundhalter in seitlicher Richtung, das heißt in Richtung der Zeichenebene wirksam hemmt. Das Formschlussprofil 103, 156 gewährleistet somit nicht nur eine stets wiederholbar exakt einstellbare Lage der Kassette gegenüber dem Grundhalter, sondern auch eine Verschiebungssicherung.

Das Formschlussprofil kann im Mittelbereich oder an beliebigen anderen Anlagepunkten zwischen der Kassette und dem Grundhalter angeordnet sein, also auch im Bereich des L-förmigen Schenkels 152.

Im vorliegenden Fall sind die Rippen 156 und die Nuten 103 im Querschnitt trapezförmig dargestellt, es können jedoch auch andere Querschnittsformen, insbesondere Wellenformen gewählt werden. Die Mindestnuttiefe beziehungsweise die Mindestwellenamplitude beträgt vorzugsweise 1 mm.

Die Spannpratze 11 ist über eine Schraube 16 am Grundhalter 10 lösbar fixiert. Eine weitere Schraube 17, die eine Bohrung der Spannpratze durchgreift, ist in einer Bohrung der Kassette 15 verankert. Aufgrund der Elastizität der Spannpratze ist es möglich, den Spannpratzenkopf so auf den Schneideinsatz 13 zu pressen, dass dieser hinreichend beim Zerspanen fixiert wird. Der Spannpratzenkopf besitzt zudem mindestens eine Bohrung 121, durch die Kühlflüssigkeit unter hohem Druck auf die beim Zerspanen aktive Schneidkante des Schneideinsatzes 13 gepresst wird. Der über die Bohrung 121 oder mehrerer solcher Bohrungen gewählte Druck der Kühlflüssigkeit liegt mindestens bei 0,3×10⁷ Pa, vorzugsweise bei mehr als 10⁷. Der Durchmesser der Austrittsöffnung 121 liegt beispielsweise bei 0,5 mm bis 3 mm, vorzugsweise zwischen 1 mm und 1,5 mm. Der Abstand der Austrittsöffnung 121 zur aktiven Schneidkante wird so gewählt, dass der Kühlmittel-Spritzdruck groß genug ist, um den ablösenden Span zu brechen, um die Spanlänge kurz zu halten.

Die Anlageflächen des Grundhalters 10 und der Kassette 15 sind nicht auf die in der Fig. 1 dargestellte Formgebung beschränkt. So kann beispielsweise statt des teilkreisförmigen Teils 154 eine Hakenform gewählt werden, bei der ein entsprechender Haken mit seinen Anlagenflächen in eine Hinterschneidung greift. Wesentlich ist nur, dass die dargestellte im Querschnitt teilkreisförmige Mulde 101 oder Hinterschneidung eine Verschiebung der Kassette weg von dem Grundhalter 10 verhindert.

Wie aus Fig. 1 ersichtlich, besitzt der Grundhalter 10 an seiner der Kassette 15 zugewandten Vorderseite eine ballige Form, die in Relation zur Formgestaltung der Kassette so ausgebildet ist, dass die eingespannte Kassette 15 in der Querschnittsansicht an drei Punkten an der ballig ausgebildeten Grundhalter-Vorderseite anliegt. Mit dieser "quasi-Drei-Punkt-Anlage" ist eine hinreichende Lagefestlegung sichergestellt. Die Kassetten-Vorderseite ist - wie dargestellt - zum Teil im Querschnitt geradlinig oder mit einem größeren Krümmungsradius ausgebildet, so dass beim Einlegen und Spannen der Kassette ein hinreichendes Spiel vorhanden ist, um den dargestellten Spannzustand zu erreichen.

Die vorliegende Erfindung kann insbesondere bei solchen Zerspannungsprozessen wie dem Drehen oder Stechen verwendet werden, bei dem eine gute Spankontrolle wesentlich ist. Als Beispiel hierfür ist die Fertigung von hochwertigen Turbinen zu nennen, bei der zur Vermeidung von unerwünschten Beschädigungen der Turbine Lang- oder Wirr-Späne verhindert werden müssen.

Die Kühlmittelzufuhr geschieht über entsprechende Hochdruckleitungen von der Maschine durch den Werkzeughalter über die Spannpratze bis hin zum Spannpratzenkopf 12 wie in nach dem Stand der Technik bekannter Weise. Entsprechende Bohrungen müssen kongruent zueinander angeordnet und hinreichend abgedichtet sein, was nach dem Stand der Technik prinzipiell bekannt ist. Der Kühlmittelstrahl kann so gerichtet sein, dass er von oben nach unten, von unten nach oben oder aus seitlicher Richtung auf den ablaufenden Span beziehungsweise die Schneidkante trifft. Das zugeführte Kühlmittel dient zudem zur Vermeidung einer unerwünschten Wärmeentwicklung an der Schneidkante des Schneideinsatzes 13.

### Bezugszeichenliste

- 10: Grundhalter
- 101: Mulde
- 102: Sacklochbohrung
- 11: Spannpratze
- 12: Spannpratzenkopf
- 121: Austrittsöffnung
- 13: Schneideinsatz
- 103: Nuten
- 14: Plattensitzaufnahme
- 15: Kassette
- 151: Mittelabschnitt
- 152: L-förmiger Schenkel
- 153: Kassettenschenkel
- 154: teilkugelkopfförmiger Teil
- 155: durchgehende Gewindebohrung
- 156: Rippen
- 16: Schraube
- 17: Schraube

## Patentansprüche

1. Werkzeug für die spanende Bearbeitung mit einem Grundhalter (10), einer auswechselbaren Kassette (15) mit einem Schneidplattensitz, einer Spannpratze (11) mit einem Spannpratzenarm und einem endseitigen Spannpratzenkopf (12), und einem Schneideinsatz (13), wobei die Spannpratze (11) mit dem Grundhalter (10) lösbar verbunden ist und im Werkzeug durch den Grundhalter (10) und die Spannpratze (11) mindestens eine Kühlflüssigkeitsleitung geführt ist, die in mindestens eine Ausgangsdüse (121) am Spannpratzenkopf (12) mündet, wobei die auswechselbare Kassette (15) einstückig U-förmig mit einem Mittelabschnitt (151) und zwei jeweils beidseitig des Mittelabschnitts (151) angeordneten Schenkeln (152, 153) ausgebildet ist, wovon der den Schneidplattensitz aufweisende Schenkel (152) L-förmig geformt ist und einen hakenförmigen Ansatz (154) aufweist, der im Wesentlichen senkrecht zum Plattensitz angeordnet ist und in eine Hinterschneidung oder eine Mulde des Grundhalters (10) eingreift,
**dadurch gekennzeichnet, dass**
die Kassette (15) an der dem Grundhalter (10) zugewandten Seite ein die Kassette gegen eine seitliche Verschiebung sicherndes Profil (156) besitzt, das mit einem Profil (103) des Grundhalters (10) einen Formschluss bildet.

2. Werkzeug nach Anspruch 1, **dadurch gekennzeichnet, dass** der Formschluss durch eine Verzahnung von mindestens einer Rippe (156) mit einer korrespondierenden Ausnehmung (103) gebildet wird.

3. Werkzeug nach Anspruch 2, **dadurch gekennzeichnet, dass** die Höhe der Rippe und die Tiefe der Nut mindestens 1 mm groß sind.

4. Werkzeug nach Anspruch 2 oder 3, **dadurch gekennzeichnet, dass** mindestens drei Rippen als Formschlusselemente verwendet werden, die in komplementäre ausgestaltete Nuten eingreifen.

5. Werkzeug nach einem der Ansprüche 1 bis 4, **dadurch gekennzeichnet, dass** die Formschlussverbindung zumindest im Mittelabschnitt (151) angeordnet ist.

6. Werkzeug nach einem der Ansprüche 1 bis 5, **dadurch gekennzeichnet, dass** die Kassette (15) am Grundhalter (10) mittels einer Schraube befestigt ist, die im Befestigungszustand jeweils Bohrungen der Kassette (15) und den Grundhalter durchgreift.

7. Werkzeug nach Anspruch 6, **dadurch gekennzeichnet, dass** die Schraube einen konusförmigen Kopf und der Bohrungsrand in der Kassette eine konusförmige Ansenkung aufweisen.

8. Werkzeug nach einem der Ansprüche 1 bis 7, **dadurch gekennzeichnet, dass** der Grundhalter (10) an seiner der Kassette (15) zugewandten Seite eine ballige Form aufweist.

## Claims

1. Tool for machining with a basic holder (10), a replaceable cassette (15) with a cutting insert seat, a clamping claw (11) with a clamping claw arm and a clamping claw head (12) at the end, and a cutting insert (13), wherein the clamping claw (11) is detachably connected to the basic holder (10) and at least one liquid coolant line which opens into a discharge nozzle (121) on the clamping claw head (12), is carried in the tool through the basic holder (10) wherein the replaceable cassette (15) is designed in one piece U-shaped with a middle section (151) and two legs (125, 153) each arranged on both sides of the middle section (151), of which the leg (152) carrying the insert seat is designed L-shaped and has a hook-shaped extension (154) which is arranged essentially perpendicular to the insert seat and with engages in an undercut or a depression of the basic holder (10),
**characterized in that**
the cassette (15) has a profile (156) on the side facing the basic tool holder (10) which secures the cassette (15) against lateral displacement and which forms a form-fitting with a profile (103) of the base holder (10).

2. Tool according to claim 1, **characterized in that** the form fitting is formed by a toothing of at least one rib (156) with a corresponding recess (103).

3. Tool according to claim 2, **characterized in that** the height of the rib and the depth of the groove are at least 1 mm.

4. Tool according to claim 2 or 3, **characterized in that** at least three ribs are used as form-fitting elements, which engage in complementary designed grooves.

5. Tool according to one of claims 1 to 4, **characterized in that** the form-fitting connection is arranged at least in the middle section (151).

6. Tool according to one of claims 1 to 5, **characterized in that** the cassette (15) is fastened to the base holder (10) by means of a screw which, in the fastened state, passes through bores in the cassette (15) and the basic holder.

7. Tool according to claim 6, **characterized in that** the screw has a conical head and the edge of the hole in the cassette has a conical countersink.

8. Tool according to one of claims 1 to 7, **characterized in that** the basic holder (10) has a spherical shape on its side facing the cassette (15).

## Revendications

1. Outil pour l'usinage à enlèvement de copeaux, comprenant un support de base (10), une cassette échangeable (15) ayant un siège de plaquette de coupe, une griffe de serrage (11) ayant un bras de griffe de serrage et une tête de griffe de serrage (12) située à l'extrémité, ainsi qu'un insert de coupe (13), dans lequel ladite griffe de serrage (11) est reliée de manière amovible au support de base (10) et au moins une conduite de liquide de refroidissement est menée dans l'outil à travers le support de base (10) et la griffe de serrage (11), qui débouche dans au moins une buse de sortie (121) sur la tête de griffe de serrage (12), dans lequel ladite cassette échangeable (15) est conçue d'une seule pièce en forme de U avec une section médiane (151) et deux branches (152, 153) qui sont agencées chacune de part et d'autre de la section médiane (151) et dont la branche (152) présentant le siège de plaquette de coupe est en forme de L et présente un épaulement en forme de crochet (154) qui est disposé pour l'essentiel perpendiculairement au siège de plaquette et s'engage dans une contre-dépouille ou un creux du support de base (10), **caractérisé par le fait que** la cassette (15) présente, du côté tourné vers le support de base (10), un profil (156) qui empêche la cassette de se déplacer latéralement et qui forme un engagement positif avec un profil (103) du support de base (10).

2. Outil selon la revendication 1, **caractérisé par le fait que** l'engagement positif est formé par un engrènement d'au moins une nervure (156) avec un évidement correspondant (103).

3. Outil selon la revendication 2, **caractérisé par le fait que** la hauteur de la nervure et la profondeur de la rainure sont de 1 mm au moins.

4. Outil selon la revendication 2 ou 3, **caractérisé par le fait qu'**au moins trois nervures sont utilisées en tant qu'éléments à engagement positif qui s'engagent dans des rainures conçues de manière complémentaires.

5. Outil selon l'une quelconque des revendications 1 à 4, **caractérisé par le fait que** la liaison à engagement positif est disposée au moins dans la section médiane (151).

6. Outil selon l'une quelconque des revendications 1 à 5, **caractérisé par le fait que** la cassette (15) est fixée au support de base (10) au moyen d'une vis qui, à l'état de fixation, traverse respectivement des alésages de la cassette (15) et le support de base.

7. Outil selon la revendication 6, **caractérisé par le fait que** la vis présente une tête conique et que le bord d'alésage dans la cassette comprend un chanfreinage conique.

8. Outil selon l'une quelconque des revendications 1 à 7, **caractérisé par le fait que**, de son côté montrant vers la cassette (15), le support de base (10) présente une forme bombée.
